# EUROPEAN PATENT APPLICATION

(11) **EP 4 521 286 A1**
(43) Date of publication of application: **12.03.2025**
(21) Application number: 23315341.0
(22) Date of filing: 06.09.2023
(51) Int. Cl.: G06F 21/64, G06Q 20/02, G06Q 20/38, G06Q 20/40, H04L 9/32, H04L 9/00

(54) **GENERATION OF A DIGITAL CONTRACT AS A VERIFIABLE CREDENTIAL**

(71) Applicant: THALES DIS FRANCE SAS, 92190 Meudon (FR)
(72) Inventor: Maunier, Gérald, 83110 Sanary-sur-Mer (FR); Schalldach, Thomas, 27343 Bustehrad (CZ); Bruna, Hugo, 1300 Praha (CZ)
(74) Representative: Quintero Romero, Manuel

(57) **Abstract**

The invention provides a method of generating a digital contract between at least a first user of a first terminal and a second user of a second terminal, wherein the method comprises:
- obtaining (300) contract information, the contract information comprising a first identifier associated with the first user and a second identifier associated with the second user;
- generating (301), based on the obtained contract information, a digital contract having a data structure with at least a first section including terms of the digital contract and a second section comprising the first identifier and the second identifier;
- giving access (302) to the generated digital contract to the first terminal and to the second terminal, in order to obtain a first digital signature from the first user and a second digital signature from the second user.

## Description

### TECHNICAL FIELD

This invention is related to the field of generation of digital documents generation, and in particular of digital contracts that can be stored in a digital wallet.

The invention is particularly useful in the context of Self-Sovereign Identity, SSI, which is an approach to digital identity that gives individuals controls over the information they use to prove who they are to services, corresponding to websites or applications for example.

### BACKGROUND OF THE INVENTION

Digitization applies to more and more documents, including legal documents. It is the case of contracts, which are digitized in the form of digital contracts, which can be approved by an individual without the need to physically sign a paper document.

A digital contract can be accepted by an individual by clicking on a "yes" button on a website or on an application hosted on a user device. Alternatively, a digital signature based on a Public Key Architecture, PKI, can be used to sign a digital contract.

However, the current solutions have the following drawbacks.

The "yes" button solution is not secure and trustable enough, and the user does not have a, real control on the steps following the validation using the "yes" button. The final contract may also be different from what has been approved by the user.

For example, a user would like to subscribe to an insurance contract online. The terms of the contract are displayed and, to accept them, a check box "I agree with terms" is displayed on a user interface of the application or website. The user accepts them and can then log in on his insurance website account to consult the agreed terms. In some situations, the user wants to use his insurance cover, for example because of an accident, which may happen several years after the user's agreement on the insurance contract. The insurance company may have changed the terms in the meantime so that the coverage amount is lower than what is expected by the user.

It is then difficult for the user to prove that the terms have changed, unless the user downloaded the contract after approval on a user device.

This solution for consenting a contract therefore cannot be trusted and lacks transparency for the user.

According to another solution using peer to peer signing based on PKI, two or more signatories are signing a contract legally binding them, according to some terms that have been previously agreed on by the signatories.

The last signatory to sign however has the ability to cheat. Indeed, one of the signatories creates the contract, signs it and sends it to the other signatory or signatories. The last signatory to sign may wait for all the other signatures to be placed on the contract. Once all the signatures of the other signatories are placed on the contract, the last signatory signs the contract without sending it to the other signatories. Consequently, only the last signatory has an active version of the contract, that is enforceable, whereas other signatories have a version where at least one signature is missing.

For example, a seller wants to sell a car to a buyer. The signatories of the sale contract are the seller and the buyer. The seller creates and sign a sale contract and sends it to the buyer. The buyer signs it and keeps the contract, without sending it back to the seller. The sale is not legally executed because the seller never receives the agreement of the buyer. However, the buyer can prove to a third party that the sale is done by providing all the signatures.

Again the solution for consenting a contract cannot be trusted for all the signatories of the contract.

In some cases, a digital contract can be used by one of the signatories to access a service provided by a service provider. The service provider may allow access to the service, only after verifying that the digital contract provided by the signatory is valid. The service provider acts as a verifier in this case. The verifier may need to check that all the signatures are included in the contract, and that the contract has not been modified afterwards.

Therefore, there is a need for generating a digital contract that can be shared to all the signatories while enabling a signature process that can be trusted, and ensuring that all the signatories have the same information and version of the contract, and while enabling a verifier to check the validity and the integrity of the digital contract when one of the signatories wants to access a service conditioned by a valid digital contract. It is also preferred to allow the signatories to have control over the personal data that can be accessed in the digital contract.

### SUMMARY OF THE INVENTION

The present invention provides a solution for the aforementioned problems by a method of generating a digital contract according to claim 1, a computer program according to claim 12, a device according to claim 13, and a system according to claim 14. In dependent claims, preferred embodiments of the invention are defined.

In a first inventive aspect, the invention provides method of generating a digital contract between at least a first user of a first terminal and a second user of a second terminal, wherein the method comprises:
- obtaining contract information, the contract information comprising a first identifier associated with the first user and a second identifier associated with the second user;
- generating, based on the obtained contract information, a digital contract having a data structure with at least a first section including terms of the digital contract and a second section comprising the first identifier and the second identifier;
- giving access to the generated digital contract to the first terminal and to the second terminal, in order to obtain a first digital signature from the first user and a second digital signature from the second user.

Therefore, the digital contract that is generated can have the data structure of a Verifiable Credential. The World Wide Web Consortium, W3C, issued a recommendation about the Verifiable Credentials data model, version 1.1, on March 3^{rd} 2022.The VC environment allows the check the integrity of the data, in particular when the VC is signed by the issuer. The VC environment also proposes Verifiable Presentations which enables a holder of a VC to present a VC to a verifier. The verifier can then verify the integrity of the VC based on a digital signature of the holder. Therefore, the use of the VC data model for generating a digital contract, enables to ensure integrity of the digital contract while enabling signatories to access to the same version of the digital contract.

According to some embodiments, the first identifier may be a first Decentralized Identifier, DID, and the second identifier may be a second DID, each of the first and second DIDs may be a Uniform Resource Identifier, URI, and may comprise a DID URI scheme identifier, an identifier of a DID method and a DID method-specific identifier.

This allows to uniquely identify a user while allowing each user to control the personal information that is disclosed in a DID document that can be accessed based on the DID.

According to a first embodiment, the contract information may be obtained by a trusted party entity, different from the first and second terminals, the trusted party entity may generate the digital contract as a digital contract proposal, and giving access to the generated digital contract may comprise transmitting the digital contract proposal to the first terminal and to the second terminal. The method may further comprise receiving, by the trusted party entity, a first digital signature of the digital contract proposal from the first terminal and receiving, by the trusted party entity, a second digital signature of the digital contract proposal from the second terminal. The method may further comprise, generating, by the trusted party entity, a final digital contract based on the digital contract proposal, the first digital signature and the second digital signature.

The first embodiment enables to avoid the last signatory to cheat, as the trusted entity is collecting digital signatures of the signatories before generating the final digital contract.

In complement, according to the first embodiment, the final digital contract may have a data structure of a Verifiable Credential, including:
- a first VC section comprising the terms included in the first section of the digital contract proposal;
- a second VC section comprising the first identifier of the first user, the second identifier of the second user, the first digital signature of the first user and the second digital signature of the second user;
- a third VC section including a third digital signature of the trusted party entity, the third digital signature based on a secret key of the trusted party 120 and based on the first VC section and the second VC section of the final digital contract.

The third VC section enables to ensure integrity of the final digital contract, and to allow a verifier to check the integrity. The first VC section comprising the terms can therefore not be modified without the consent of all the other signatories.

Alternatively, according to a second embodiment, the contract information may be obtained by the first terminal, the first terminal may generate the digital contract, and giving access to the generated digital contract may comprise transmitting the digital contract to the second terminal.

The second embodiment defines a decentralized process that does not require a trusted party to generate the digital contract.

In complement, in the second embodiment, the method may further comprise generating a first digital signature of the digital contract by the first terminal, based on a secret key of the first terminal and on the digital contract;
determining a transaction identifier based on the digital contract;
transmitting to a registry, via a communication network, the first digital signature and the transaction identifier, so that the registry stored the first digital signature in association with the transaction identifier.

Therefore, the digital signatures of the contract can be stored by all the signatories in a common registry, that can be a public ledger for example. The registry can be a decentralized registry, such as a Blockchain, which ensures that the digital signatures cannot be modified and can be dated, without modifying the date. A secure process of signature is therefore defined, while all the signatories have all the same level of information and the same version of the digital contract. Also, a better privacy is enabled by the second embodiment, as the digital contract may remain confidential between the signatories, unless one of the signatories decides to share it. Indeed, only the transaction identifier is stored in the registry in association with the digital signatures.

Still in complement according to the second embodiment, the method may further comprise:
- transmitting, by the first terminal, a request to obtain digital signatures associated with the transaction identifier to the registry;
- receiving, by the first terminal, a response from the registry comprising at least one digital signature associated with the transaction identifier; and
- determining, by the first terminal, a validity of the digital contract based on whether the second user of the second terminal has transmitted a second digital signature associated with the transaction identifier to the registry.

This allows each of the signatory to determine a status of validity of the digital contract.

According to the second embodiment, the method may further comprise:
- receiving, by the first terminal, a request to present the digital contract from a server;
- generating, by the first terminal, a Verifiable Presentation, VP, of the digital contract, wherein the VP comprises a first VP section including at least the first identifier of the first terminal, a second VP section including the digital contract and a third VP section comprising a presentation digital signature determined based on the secret key of the first terminal, on the first VP section and on the second VP section;
- transmitting the VP to the server.

This allows to present the digital contract to a verifier while enabling the verifier to check the integrity of the digital contract. The server may check the validity of the digital contract by obtaining the transaction identifier (determining based on a hash function, or retrieving it from the VP, if the VP includes the transaction identifier) and accessing to the digital signatures associated with the transaction identifier in the registry.

In complement in the second embodiment, the server may provide access to a service, the first terminal may transmit a request of service to the server, and the request to present the digital contract may be received from the server in response to the request of service.

Therefore, the access to the service provided by the server can be conditioned by the validity of the contract and by the compliance of the terms of the digital contract with a policy of the server. The server can act as a verifier and can check the integrity of the terms of the contract.

According to the second embodiment, the terms of digital contract may comprise a revocation policy of the digital contract and the method may further comprise generating, by the first terminal, a revocation digital signature based on the secret key of the first terminal, and transmitting, by the first terminal, a request for revocation of the digital contract to the registry, the request for revocation comprising the revocation digital signature and the transaction identifier.

This allows to implement a multi-party revocation policy. A holder or verifier can then determine the validity of the digital contract based on the number of digital signatures associated with the transaction identifier, and by comparing this number with the number of signatories.

According to some embodiments, the first identifier of the first user may be associated with a public key of the first terminal in an identity registry and wherein the second identifier of the first user is associated with a second public key of the second terminal in the identity registry.

This allows a verifier to check the digital signatures stored in the registry.

A second aspect of the invention concerns a computer program comprising instructions arranged for implementing the method according to the first aspect of the invention, when said instructions are executed by a processor.

A third aspect of the invention concerns a device for generating a digital contract between at least a first user of a first terminal and a second user of a second terminal, comprising:
- a first interface configured to obtain contract information, the contract information comprising a first identifier associated with the first user and a second identifier associated with the second user;
- a processor configured to generate, based on the obtained contract information, a digital contract having a data structure with at least a first section including terms of the digital contract and a second section comprising the first identifier and the second identifier;
- a second interface configured to give access to the generated digital contract to the first terminal and to the second terminal, in order to obtain a first digital signature from the first user and a second digital signature from the second user.

A fourth aspect of the first embodiment of the invention concerns a system comprising a device according to the third aspect of the invention, a first terminal of a first user and a second terminal of a second user, wherein the device is different from the first terminal and from the second terminal.

A fourth aspect of the second embodiment of the invention concerns a system comprising the device according to the third aspect of the invention, wherein the device is a first terminal of a first user, and further comprising a second terminal and a registry configured to store digital signatures in association with a transaction identified determined based on the digital contract.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- [Fig. 1]: shows an environment for implementing a method according to some embodiments of the invention;
- [Fig. 2a]: illustrates a data structure of a digital contract, according to some embodiments of the invention;
- [Fig. 2b]: illustrates a data structure of a verifiable presentation of a digital contract, according to some embodiments of the invention;
- [Fig. 3]: illustrates the steps of a method for generating a digital contract according to some embodiments of the invention;
- [Fig. 4]: is an exchange diagram showing the steps of a method according to a first embodiment of the invention;
- [Fig. 5]: is an exchange diagram showing the steps of a method according to a second embodiment of the invention;
- [Fig. 6]: shows the structure of a device for generating according to some embodiments of the invention.

### DETAILED DESCRIPTION OF THE INVENTION

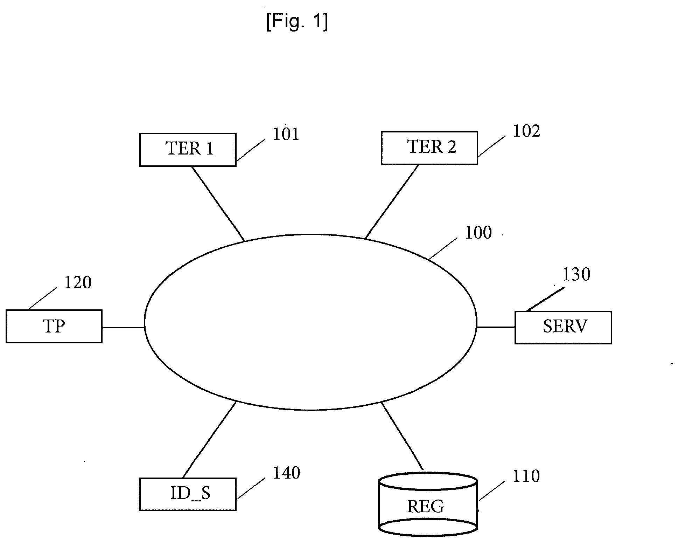

Figure 1 shows an exemplary environment for implementing a method of generating a digital contract according to some embodiments of the invention.

The environment can be supported by a network 100, such as an extended IP network that allows to connect together network entities that are located in different places, that can be remote from each other.

A first terminal 101 is used by a first user to access the network 100. In the context of the invention, the first user is one of the signatories of the digital contract to be generated according to the invention.

A second terminal 102 is used by a second user to access the network 100. The second user is also one of the signatories of the digital contract to be generated according to the invention.

No restriction is attached to the first and second terminals 101 and 102, which can be any user device, handheld or not, such as a laptop, a desk computer, a Smartphone, a touch pad, etc.

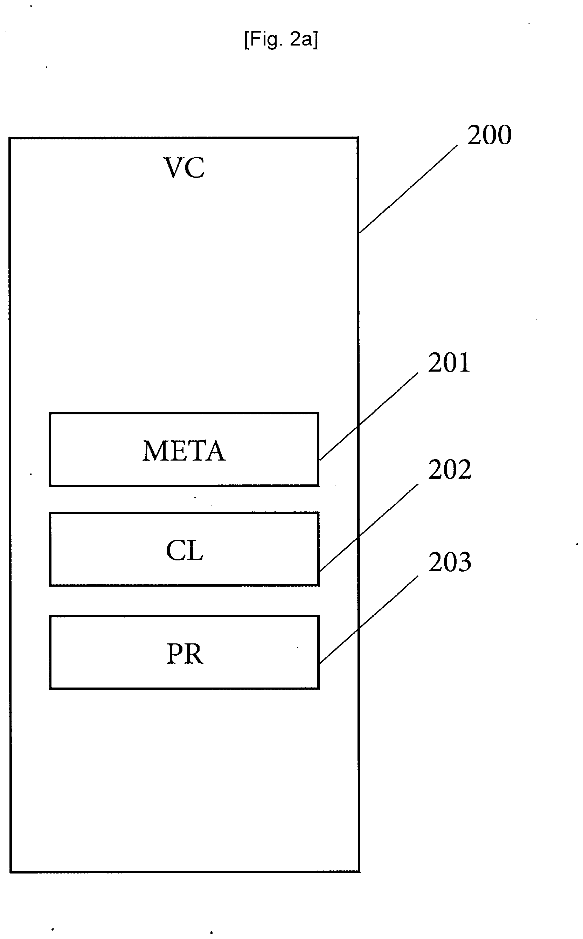

According to some embodiments, the first terminal 101 integrates a first digital wallet that allows the first user to store digital assets and documents on the first terminal 101. In particular, the first digital wallet is able to store at least one Verifiable Credential, VC, such as described on Figure 2a. The second terminal 102 may also integrate a second digital wallet that allows the second user to store digital assets and documents on the first terminal. In particular, the second digital wallet is able to store at least one VC.

The first and second digital wallets may be software applications executed on the first and second terminals 101 and 102, that are able to store and access the digital access in a secure storage of the first and second terminals 101 and 102, or in a cloud that can be accessed via the network 100.

The concept of digital wallet is well known and is not further described in the present description.

The first user and the second user are each associated with a first identifier and a second identifier.

Generally, identifiers may correspond to personal information. No restriction is attached to personal information, which may encompass a last name, first name, gender, date of birth, place of birth, diploma, social security number, or any other information that is associated with a given person, such as the first user and the second user. Some personal information can be contained in an identity document, delivered by a central authority, such as a driver's license, an ID card, a passport. The identity document may be a digital document, or a scan of a physical document, that can be stored in a storage of a terminal such as one of the first and second terminals 101 and 102, or in a remote storage, such as a cloud accessed by a terminal such as one of the first and second terminals 101 and 102.

Alternatively, the first and second identifiers of the first and second users may be a Decentralized Identifier, DID. In contrast to typical identifiers, DIDs are designed so that they may be decoupled from centralized registries and identity providers. DIDs are designed to enable individuals and organizations to generate their own identifiers using systems they trust. These new identifiers enable entities to prove control over them by authenticating using cryptographic proofs such as digital signatures. In particular, when creating a DID, the user can decide which personal information is disclosed by the DID.

A DID generally comprises three parts, in the form of an URI, for Unified Resource Identifier:
- a first part being a DID URI scheme identifier, which enables, when parsing the URI, to determine that the URI refers to a DID. The first part is "did";
- a second part identifying a DID method. The DID method may be defined by a DID method specification, which specifies the precise operations by which DIDs and DID documents are created, resolved, updated and deactivated. For example, the second part may consist of the following sequence of alphanumeric characters "example";
- a third part, which is a DID method-specific identifier, which identifies a DID according to the format defined by the method corresponding to the second part. For example, the third part may consist of the following sequence of alphanumeric characters "123456789abcdefghi".

Each part of the DID may be separated by a given character, such as ":" according to the URI format. In the example given above, the DID is as follows:
did:example:123456789abcdefghi

Each DID of a user, may be recorded in an identity registry 140, which may be accessed by terminals and other network entities, via the network 100. The identity registry 140 records each DID in association with a DID document.

A DID document contains information associated with the DID, such as ways to cryptographically authenticate a DID controller (which may be the same person as the DID subject, that is the person/user associated with the DID), such as a public key for example.

A terminal can access to the DID document associated with a DID, by generating a DID URL based on the DID and by accessing the identity registry 140 using the DID URL.

The DID URL extends the syntax of the DID to incorporate other standard URI components such as path, query, and fragment, in order to locate a particular resource, for example, a cryptographic public key inside a DID document.

In what follows, it is considered, for illustrative purpose that the first user is associated with a first DID and that the second user is associated with a second DID. It is to be noted that the first user may be associated with several first DIDs and/or the second user may be associated with several second DIDs.

The identity registry 140 may also comprise certificates identifying public keys and cryptographic methods, associated with network entities, such as the user terminals 101 and 102, and that can be retrieved via the network 100.

The identity registry 140 may be integrated in a server, or may be a distributed registry stored in several servers/terminals.

In the following description, it is considered, for illustrative purposes, that a digital contract is created between two signatories, which are the first user and the second user. According to the invention, the digital contract may involve more than two signatories, such as three or more signatories. In that case, additional user terminals may access the network 100, each additional terminal being dedicated to an additional user, who is also signatory of the contract.

A trusted party entity 120, being a terminal or server and named trusted party 120 is what follows, may also access the network 100 so as to communicate with network entities. As it will be explained in what follows, in some embodiments of the invention, the trusted party 120 is able to issue, or generate, a digital contract and to communicate the generated digital contract to the signatories.

A registry 110 can also access the network 110, and may store the digital contract bounding the first and second users, according to some embodiments of the invention. The registry 110 may be integrated in a single server or may be distributed registry, such as a Blockchain, that is distributed in several servers/terminals.

A server 130 of a servicer provider can also access the network 100. The server 130 can act as a verifier of the generated digital contract. For example, verification of the digital contract may be a condition to access a service provided by the server 130. Verification of the digital contract may comprise checking its validity and verifying its terms.

Figure 2a illustrates a data structure of a digital contract 200 according to some embodiments of the invention.

According to the invention, a digital contract 200 has a data structure that complies with the data structure of a Verifiable Credential.

A Verifiable Credential may comprise a first VC section 201, a second VC section 202, and a third VC section 203.

The first VC section 201 comprises metadata, which may include contextual information, a type of the VC, an identifier of the VC and which may identify an issuer of the VC.

According to the invention, the VC is a digital contract, so that the issuer relates to the issuer of the issuer contract, which may be the trusted party 120 or one of the signatories of the contract, as it will be further detailed hereafter.

The identifier of the issuer may enable to access to more information related to the issuer, which may be stored in a verifiable data registry. The verifiable data registry may be integrated in the identity registry 140 as previously described, or may be separate. The verifiable data registry may thus contain a list of known issuers and the properties that they state they are authoritative for. It may also contain a public key associated with each issuer of the list.

According to the invention, the first VC section 201 may comprise the terms of the digital contract.

The second VC section 202 comprises claims, which may identify at least one VC subject. No restriction is attached to the way the at least one VC subject is identified.

According to the invention, the VC 200 is a contract, so that the second VC section 202 identifies at least two VC subjects, which are identifiers of the signatories of the contract. In the example considered here, the second VC section 202 identifies the first user and the second user, using the first DID and the second DID for example.

The third VC section 203 may comprise a proof, which may be a signature of the issuer, obtained based on a secret key of the issuer. This enables a verifier to verify the integrity of the VC and/or that the VC has been issued by an issuer that can be trusted.

According to the VC environment, the VC 200, once issued by an issuer, is communicated to a holder, for storage and for further use by the holder. The holder may be the credential subject, or signatory, identified in the "claims" second VC section 202.

According to the invention, because the VC 200 is a digital contract between the first user and the second user, the digital contract, once issued may be made accessible to the first terminal 101 and to the second terminal 102, which are the two holders of the VC 200. Each terminal can store the digital contract in its digital wallet.

Each holder of a VC 200 can present a Verifiable Presentation, VP, to a verifier, the VP having a data structure including the VC 200. This enables the verifier to verify the VC and to verify that the holder is the true holder of the VC. In the example given above, when the first user wants to access a service provided by the server 130, the server 130 may request a VP of a valid digital contract of the first user before granting access to the service.

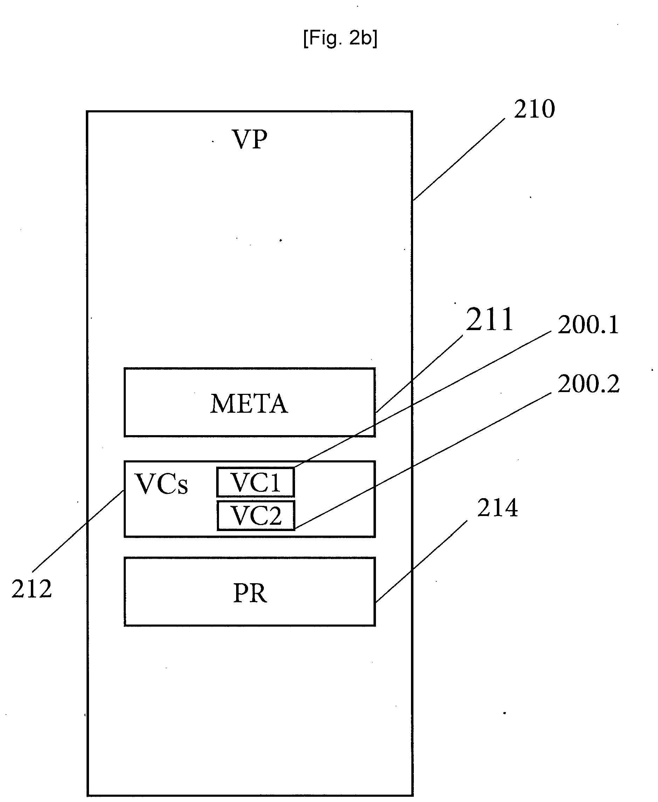

Figure 2b shows a data structure of a VP 210 according to some embodiments of the invention.

The VP 210 may comprise a first VP section 211, a second VP section 212 and a third VP section 213.

The first VP section 211 may comprise metadata, such as contextual information, a type of the VP 210 and/or an identifier of the holder of the VP, such as the DID of the holder of the VP 210.

The second VP section 212 may comprise a set of at least one VC 200. Therefore, the second VP section 212 may include, for each VC 200 of the set of at least one VC, the first VC section 201, the second VC section 202 and the third VC section 203.

In the example shown on figure 2b, the VP 210 may comprise a first VC 213.1 and a second VC 213.2. However, according to the invention the VP 210 may comprise a single VC, or may comprise more than two VCs.

The third VP section 213 may comprise a proof, which is a signature of the VP 210 by the holder of the VP 210, based on the secret key of the holder of the VP 210. This allows

This enables a verifier to verify the integrity of the VP and/or that the VP 211 is presented by a holder of the at least one VC contained in the VP 210.

The data structures of VC and VP described on Figures 2a and 2b comply with the recommendation of the W3C related to the Verifiable Credentials data model version 1.1 released on March 3rd 2022.

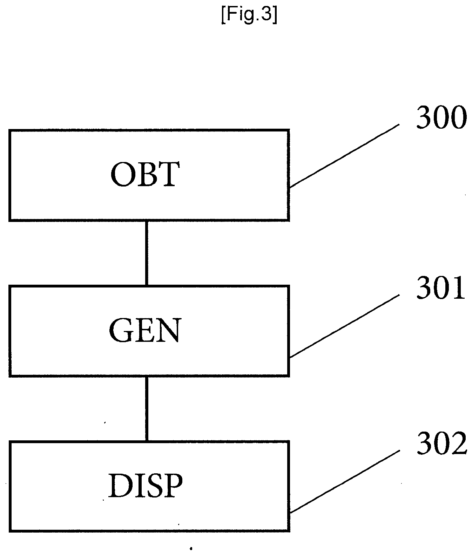

Figure 3 shows the general steps of a method according to some embodiments of the invention.

At step 300, a network entity acting as an issuer obtains contract information about a digital contract to be issued between at least two signatories. The network entity of the issuer can be the trusted party 120, the first terminal 101 or the second terminal 102.

The contract information may comprise:
- the terms of the contract;
- identifiers of the signatories. In the example described above, this may include the first DID of the first user and the second DID of the second user;
- optionally a limit date to sign the digital contract;
- optionally an expiration date of the digital contract.

The contract information may be obtained from one or several of the signatories. When the issuer is the first user, the contract information can be input in the first terminal 101 by the first user.

At step 301, the issuer generates a digital contract in the form of a VC, such as shown on Figure 2a, where:
- the terms received with the contract information are included in the first VC section 201;
- the signatories are identified in the second VC section 202. In the example described above, the first DID and the second DID are therefore included in the second VC section 202;
- optionally, the expiration date and the limit date to sign may be included in the first VC section 202;
- a signature of the issuer may be included in the third VC section.

At step 302, the issuer gives access to the generated digital contract to all the signatories, so as to allow the signatories to generate digital signatures of the digital contract.

The method according to the invention may comprise further steps, which are described hereafter for two different embodiments according to the invention.

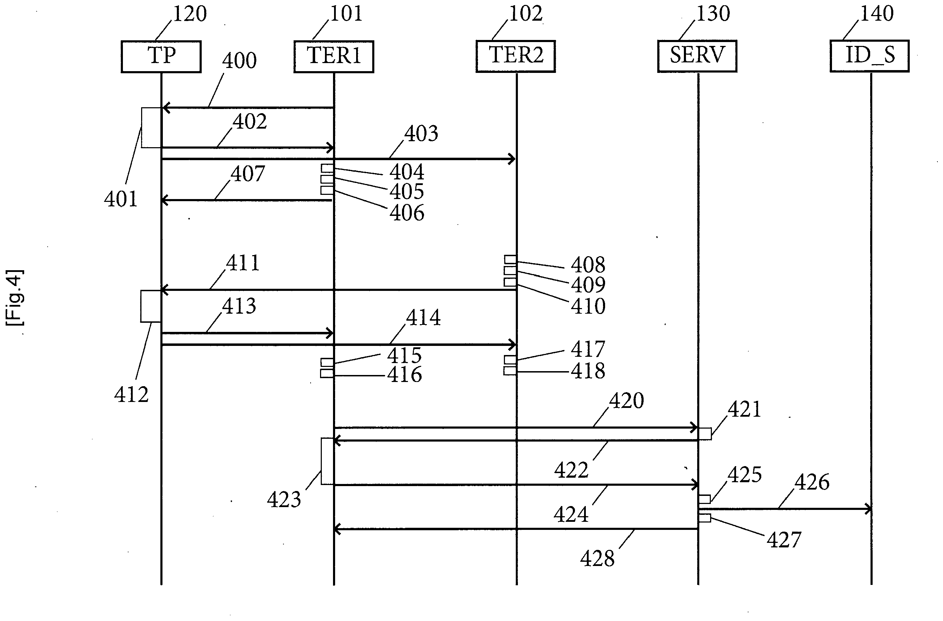

Figure 4 is a diagram showing the steps of a method according to a first embodiment of the invention.

According to the first embodiment, the trusted party 120 acts as the issuer and is in charge of issuing first a digital contract proposal in the form of a VC, to collect digital signatures of the digital contract proposal by all the signatories, and then to generate a signed final digital contract, which is submitted to the signatories for storage and further use. Details of the first embodiments are described hereafter.

At step 400, the terminal of one of the signatory, for example the first terminal 101, provides contract information to the trusted party 120. Step 400 corresponds to step 300 that has been previously described.

At step 401, upon reception of the contract information, the trusted party 120 generates a digital contract with a VC data structure. Step 401 corresponds to step 301 that has been previously described. According to the first embodiment, the digital contract generated at step 401 is a digital contract proposal that comprises an empty third VC section 203. That is, the third VC section 203 is left empty and does not comprise the signature of the trusted party 120, which acts as issuer.

The digital contract proposal comprises an identifier for each signatory included in the second VC section 202. In the example described above, the digital contract proposal comprises a first identifier of the first user, such as the first DID, and a second identifier of the second user, such as the second DID.

The first VC section 201 comprises the terms of the contract and optionally the expiration date of the contract and the limit date to sign.

At step 402, the trusted party 120 transmits the generated digital contract proposal to the first terminal 101. At step 403, the trusted party 120 transmits the generated digital contract proposal to the second terminal 102.

Therefore, both first and second users receive the same digital contract proposal.

No restriction is attached to the order in which the digital contract proposal is transmitted to the first and second terminals 101 and 102. The transmissions may be sequential or in parallel.

Steps 402 and 403 correspond to step 302 that has been previously described.

It is considered hereafter, for illustrative purpose, that the digital contract proposal is transmitted to the first user first, and that the first user proceeds with the signature of the digital contract proposal before the second user does.

At step 404, the first user accepts to sign the digital contract proposal on the first terminal 101. To this end, the first terminal 101 may extract the terms of the contract and display them to the first user, for example on a screen of the first terminal 101, and may receive a user input from the first user indicating to accept the terms and to consent to sign the digital contract proposal. Alternatively, the first user may refuse to sign the digital contract proposal, for example because he considers the terms do not correspond to the contract information previously sent at step 400.

At step 405, if the first user accepts the terms, and consents to sign the digital contract proposal, the first terminal 101 generates a first digital signature of the digital contract proposal to sign the digital contract proposal.

Signing of the digital contract proposal at step 405 may include generation of a first VP 210 of the digital contract proposal, that includes the digital contract proposal in the second VP section 212 and that includes the first digital signature of the first user in the third VP section 214. The first digital signature of the first user may be based on the secret key of the first user that is stored in the first terminal 101. In that case, the first signed digital contract proposal is the first VP 210 of the digital contract proposal.

At step 406, the first terminal 101 stores the first signed digital contract proposal in a local storage of the first terminal 101 or in a remote storage.

At step 407, the first terminal 101 transmits the first signed digital contract proposal to the trusted party 120.

On the second terminal 102 side, at step 408, the second user accepts to sign the digital contract proposal on the second terminal 102. To this end, the second terminal 102 may extract the terms of the contract and display them to the second user, for example on a screen of the second terminal 102, and may receive a user input from the second user indicating to accept the terms and to consent to sign the digital contract proposal. Alternatively, the second user may refuse to sign the digital contract proposal, for example because the second user does not agree with the terms.

At step 409, if the second user accepts the terms and consents to sign the digital contract proposal, the second terminal 102 generates a second digital signature to sign the digital contract proposal to obtain a second signed digital contract proposal.

Signing of the digital contract proposal at step 409 may include generation of a second VP 210 of the digital contract proposal, that includes the digital contract proposal in the second VP section 212 and that includes the second digital signature of the second user in the third VP section 214. The second digital signature of the second user may be based on the secret key of the second user that is stored in the second terminal 102. In that case, the second signed digital contract proposal is the second VP 210 of the digital contract proposal.

At step 410, the second terminal 102 stores the second signed digital contract proposal in a local storage of the second terminal 102 or in a remote storage.

At step 411, the second terminal 102 transmits the second signed digital contract proposal to the trusted party 120.

Thus, in case each of the signatories consents to sign the digital contract proposal, the trusted party 120 obtains several signed digital contract proposals.

At step 412, the trusted party 120 checks that all the signatures of all the signatories have been received. To this end, the trusted party 120 may compare the number of received signed digital contract proposals with the number of signatories of the digital contract proposal.

The trusted party 120 may further check the signature of each received signed digital contract proposal. To this end, the trusted party 120 may check the signature of each signatory based on the public key of each signatory, which may be accessed in the identity registry 140, in association with the identifier of the signatory, for example in association with the DID of the signatory. The public key of a user can be included in a DID document associated with the DID of the user.

If all the signatures of the signatories have been received, the trusted party generates, during step 412, a final digital contract with the data structure of a VC, the final digital contract comprising:
- a first VC section 201 that is similar to the first VC section 201 of the digital contract proposal previously generated;
- a second VC section 202 that comprises the first identifier of the first user, such as the first DID, the second identifier of the second user, such as the second DID, and that further comprises the first digital signature of the first user and the second digital signature of the second user. The first digital signature has been extracted by the trusted party 120 from the first signed digital contract proposal and the second digital signature has been extracted by the trusted party 120 from the second signed digital contract proposal;
- a third VC section 203 including a third digital signature of the trusted party 120. The trusted party 120 generates the third digital signature based on a secret key of the trusted party 120.

At step 413, the trusted party 120 transmits the final digital contract to the first terminal 101.

At step 414, the trusted party 120 transmits the final digital contract to the second terminal 102.

At step 415, the first user may check the final digital contract on the first terminal 101. In particular, the first terminal 101 may display the final digital contract, so that the first user can check that the terms included in the first VC section 201 are identical to the terms that have been accepted at step 404. The first user may then validate the final digital contract.

At step 416, the first terminal 101 may store the final digital contract, if validated by the first user, in a local storage of the first terminal 101 or in a remote storage that is accessible to the first terminal 101.

At step 417, the second user may check the final digital contract on the second terminal 102. In particular, the second terminal 102 may display the final digital contract, so that the second user can check that the terms included in the first VC section 201 are identical to the terms that have been accepted at step 408. The second user may then validate the final digital contract.

At step 418, the second terminal 102 may store the final digital contract, if validated by the second user, in a local storage of the second terminal 102 or in a remote storage that is accessible to the second terminal 102.

Therefore, the first terminal 101 and the second terminal 102 receives the final digital contract at the same time, and the final digital contract is valid because it includes the digital signatures of all the signatories. In addition, the final digital contract is signed by the trusted party 120, which ensures integrity of the final digital contract. The shortcomings of the prior art are therefore overcome.

Each of the signatory can then present the final digital contract to a third party, acting as a verifier, for example to access a service provided in the network 100. In what follows, it is considered, for illustrative purposes, that the first user wants to access to a service provided by the server 130.

At step 420, the first user wants to access a service provided by the server 130. To this end, the first terminal 101 transmits a service request to the server 130.

Upon reception of the service request, the server 130 determines at step 421 that the access to the service is conditioned by a verification of a valid digital contract to be provided by the first user.

In response to the service request, the server 130 transmits a request for presentation of a digital contract to the first terminal 101.

Upon reception of the request for presentation of a digital contract, and if the first user agrees to present the final digital contract to the server 130, the first terminal 101 generates, at step 423, a presentation of the final digital contract, according to the data structure of the VP 210, based on the final digital contract that has been previously stored, and signed by a presentation digital signature of the first user.

The presentation of the final digital contract therefore has the data structure of the VP 210, including:
- a first VP section 211, which may comprise metadata as previously explained;
- a second VP section 212 comprising the final digital contract having the data structure of a VC 200;
- a third VP section 214 comprising a presentation digital signature of the first user, which is determined based on the secret key of the first user and based on the first VP section 211 and on the second VP section 212.

At step 424, the first terminal 101 transmits the presentation of the final digital contract to the server 130.

At step 425, the server 130 receives and parses the presentation of the final digital contract, to obtain the identifier of the first user, such as the first DID, which may be included in the first VP section 211. Based on the first DID, the server 130 may retrieve a public key of the first user in the identity registry 140 at step 426.

Based on the public key retrieved from the identity registry 140, the server 130 can check at step 427 the first signature of the first user placed in the third VP section 214 of the presentation of the final digital contract. This allows the ensure the integrity the first VP section 211 and of the second VP section 212 comprising the final digital contract. The server130 may further check that the final digital contract is valid, by verifying the signatures of the final digital contract included in the second VP section 212. In the example, the server 130 checks that the first user and the second user have both signed the final digital contract. Validity can also be checked by:
- verifying that the final digital contract has been signed by all the signatories before the limit date to sign;
- verifying that the expiration date of the digital contract has not expired.

If, at step 427, the integrity of the final digital contract is checked and the final digital contract is valid, the server 130 may grant access to the service to the first terminal 101 at step 428.

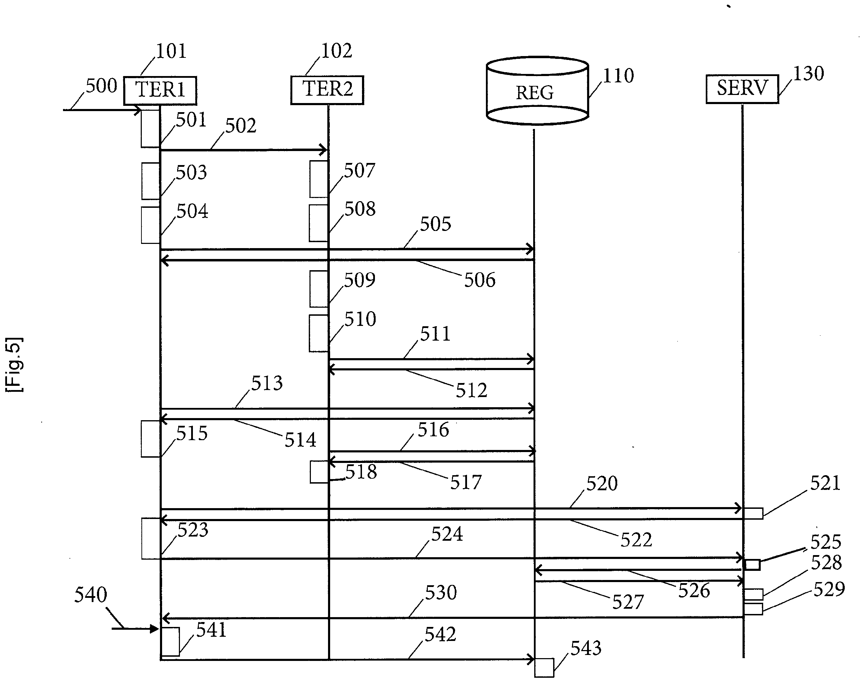

Figure 5 is a diagram showing the steps of a method according to a second embodiment of the invention.

According to the second embodiment, no third party such as the trusted party 120 is required, and the digital contract and the signatures of the signatories are stored in a common registry. Also, according to the second embodiment, the issuer of the digital contract may be one of the signatories. In what follows, it is considered, for illustrative purposes that the issuer is the first user.

At step 500, the first terminal 101 obtains contract information, which can be input by the first user via a user interface of the first terminal 101 for example.

The contract information may comprise:
- the terms of the contract. The terms of the contract may further comprise a revocation policy, which defines how the digital contract can be revoked. For example, the revocation policy may define a criterion that the digital contract can be revoked by any of the signatories, by a given signatory, or only if all the signatories decide to revoke it;
- identifiers of the signatories. In the example described above, this may include the first DID of the first user and the second DID of the second user;
- optionally a limit date to sign the digital contract;
- optionally an expiration date of the digital contract.

Step 500 corresponds to step 300 that has been previously described.

At a step 501, the first terminal 101 generates a digital contract with a data structure of a VC, based on the obtained contract information.

Step 501 corresponds to step 301 that has been previously described. According to the second embodiment, and in contrast with the first embodiment, the digital contract generated at step 501 is final version (but initially not signed), without the need to first generate a digital contract proposal. That is, the third VC section 203 comprises the signature of the first terminal 101, which acts as the issuer of the digital contract.

The digital contract comprises an identifier for each signatory included in the second VC section 202. In the example described above, the digital contract comprises a first identifier of the first user, such as the first DID, and a second identifier of the second user, such as the second DID.

The first VC section 201 comprises the terms of the contract and optionally the expiration date of the digital contract, the limit date to sign and the revocation policy.

At step 502, the first terminal 101 transmits the generated digital contract to the second terminal 102.

Therefore, both the first and second users receive the same digital contract, which does not comprise any signature.

Therefore, after step 502, all the signatories have access to the, non-signed, digital contract.

Steps 502 correspond to step 302 that has been previously described.

At step 503, upon reception of a user input from the first user to sign the digital contract, the first device 101 generates a first signature of the digital contract at step 503. the first digital signature may be obtained based on the first digital contract and the secret key of the first user stored in the first terminal 101.

The first terminal 101 then stores the digital contract in a local storage or in a remote storage accessible to the first terminal 101, at a step 504.

At a step 505, the first terminal 101 transmits the first digital signature to the registry 110, for storage in association with a transaction identifier that is associated with the digital contract. The transaction identifier may be obtained by applying a hash function to the VC data structure of the digital contract.

At step 506, the first terminal 101 receives a confirmation that the registry 110 has stored the first digital signature in association with the transaction identifier.

At step 507, upon reception of the digital contract from the first terminal 101, the second terminal 102 may verify the signatory list in the second VC section 202, and in particular that the signatory list comprises the identifier of the second user.

If so (if the signatory list comprises the identifier of the second user), the second terminal 102 displays the digital contract at a step 508, and in particular the terms of the contract and the revocation policy, to the second user, for example on a display of the second terminal 102.

At a step 509, if the second user accepts the digital contract, for example by accepting the terms and clicking on a "signing" button, the second terminal 102 generates a second digital signature based on the digital contract and a secret key of the second user.

The second terminal 102 then stores the digital contract in a local storage or in a remote storage accessible to the second terminal 102, at a step 510.

At a step 511, the second terminal 102 transmits the second digital signature to the registry 110, for storage in association with the transaction identifier that corresponds to the digital contract. The transaction identifier is the same as the transaction identifier associated with the first digital signature previously stored in the registry 110.

At step 512, the second terminal 102 receives a confirmation that the registry 110 has stored the second digital signature in association with the transaction identifier.

It is to be noted that steps 507 to 512 may be performed in parallel to steps 503 to 506. For illustrative purpose, the sequence of steps 507 to 512 ends after the end of the sequence of steps 503 to 506. However, alternatively, the second user may sign the digital contract before the first user does.

Therefore, both users store the same version of the digital contract, and the first and second digital signatures are published on a public ledger, such as the registry 110, in association with a common transaction identifier. Advantageously, the transaction identifier is uniquely bound to the digital contract that is stored by each of the users. Each of the users can also consult the registry 110 to know whether the other signatories have signed the digital contract. In what follows, it is considered that the first user wants to know whether the second user has also signed the digital contract, then that the second user wants to know whether the first user has also signed the digital contract.

At a step 513, the first terminal 101 interrogates the registry 110 to retrieve the digital signatures associated with the transaction identifier. The registry 110 returns all the digital signatures that have been published in association with the transaction identifier, at step 514.

The first terminal 101 can therefore check, at step 515, that the number of digital signatures associated with the transaction identifier is equal to the number of signatories in the contract. If yes, the digital contract can be tagged as valid in the first terminal. If the number of signatures associated with the transaction identifier is less than the number of signatories indicated in the digital contract, then the digital contract has not been signed by all the signatories and is therefore not valid.

In the example shown on figure 5, step 513 is performed after step 512, and therefore, when the first terminal 101 interrogates the registry 110 at step 513, both the first and second digital signatures have been previously received by the registry 110. In that case, the registry 110 returns both signatures and the digital contract can be tagged as valid by the first terminal 101.

The same checking procedure can be implemented by the second terminal 102. At a step 516, the second terminal 102 interrogates the registry 110 to retrieve the digital signatures associated with the transaction identifier. The registry 110 returns all the digital signatures that have been published in association with the transaction identifier, at step 517.

The second terminal 102 can therefore check, at step 517, that the number of digital signatures associated with the transaction identifier is equal to the number of signatories in the contract.

In what follows, each of the signatories may present the digital contract to a verifier, which may be the server 130 of a service provider. The validity of the digital contract may thus be conditional to the access of the service provided by the server 130. The example of the first user requesting access to a service provided by the server 130 is described hereafter, for illustrative purposes.

At a step 520, the first terminal 101 transmits a service request to the server 130.

Upon reception of the service request, the server 130 determines at step 521 that the access to the service is conditioned by a verification of a valid digital contract to be provided by the first user, and optionally to a comparison of the terms of the digital contract with a policy of the service provider.

In response to the service request, the server 130 transmits a request for presentation of a digital contract to the first terminal 101.

Upon reception of the request for presentation of a digital contract, and if the first user agrees to present the final digital contract to the server 130, the first terminal 101 generates, at step 523, a presentation of the digital contract, according to the data structure of the VP 210, based on the digital contract that has been previously stored, and signed by a signature of the first user.

The presentation of the digital contract therefore has the data structure of the VP 210, including:
- a first VP section 211, which may comprise metadata as previously explained;
- a second VP section 212 comprising the digital contract having the data structure of a VC 200, as generated at step 501;
- a third VP section 214 comprising a presentation digital signature of the first user, which is determined based on the secret key of the first user and based on the first VP section 211 and on the second VP section 212.

At step 524, the first terminal 101 transmits the presentation of the digital contract to the server 130.

At step 525, the server 130 receives and parses the presentation of the digital contract, to obtain the identifier of the first user, such as the first DID, which may be included in the first VP section 211. Based on the first DID, the server 130 may retrieve a public key of the first user in the identity registry 140 (not shown on the figure) and may verify the presentation digital signature. Therefore, the server 130 may check the integrity of the first VP section 211 and of the second VP section 212. Then, if the integrity of the digital contract in the second VP section 212 is valid, the server 130 may obtain from the digital contract:
- the list of signatories of the digital contract. In the example described here, the list of signatories comprises an identifier of the first user, such as the first DID, and an identifier of the second user, such as the second DID; and
- the transaction identifier. The transaction identifier may be included in the first VC section 201 of the digital contract or may be determined by applying a hash function to the digital contract. Alternatively, the transaction identifier can be included in the first VP section 211 of the VP 210 with the metadata.

Based on the obtained transaction identifier, the server 130 may interrogate the registry 110, at a step 526 to obtain the digital signatures that are stored in association with the digital contract.

At a step 527, the server 130 obtains from the registry 110 the digital signatures that are associated with the transaction identifier. In what follows, it is considered that N digital signatures are obtained, N being an integer equal to or greater than 0.

At step 528, the server 130 may check the integrity and authenticity of the digital signatures received, by retrieving public keys of the signatories identified in the contract from the identity registry 120 (not shown on figure 5) and by applying the public keys to the digital signatures to compare with the received from the first terminal 201 digital contract. If integrity and authenticity of the digital signatures are valid, the method goes to step 529. Else, a refusal to provide the service is sent to the first user at step 530.

At a step 529, the server 130 may check that the digital contract is valid. To this end, the server 130 may check that N is equal to the number of signatories indicated in the digital contract. The number of signatories indicated in the digital contract is noted K is what follows, where K is an integer equal to or greater than 2. If N is less than K, then the digital contract is not valid, and a refusal to provide the service is sent to the first user at step 530.

Else, if N is strictly greater than K, this indicates that at least one of the digital signatures is a revocation signature of at least one of the signatory. The revocation mechanism will be further explained when describing steps 540 to 543. In that case, the server 130 checks the revocation policy of the digital contract to see whether the digital contract has been validly revoked. If the digital contract has been validly revoked, the server 130 may send a refusal to provide the service to the first terminal 101, at step 530. If the digital contract has not been validly revoked, then it is valid, and the server may check further validity criteria.

Else, if:
- N is equal to K, or
- N is strictly greater than K, but the revocation signatures do not comply with the revocation policy;
then the digital contract is considered valid by the server 130, or the server 130 may check further validity criteria.

The further validity criteria may comprise :
- the comparison of the expiration date of the digital contract with a current date. If the expiration date is expired, then the digital contract is not valid;
- comparison of the dates of the K digital signatures that have the earliest dates in the registry 110, with the time limit to sign that is indicated in the digital contract. If at least one of the K digital signatures that have the earliest dates has a date that is after the limit date to sign, then the digital contract is not valid.

If the digital contract is considered as not valid by the server 130, then the server 130 sends a refusal to provide the service the first terminal 101 at step 530.

Else, if the digital contract is considered as valid, the server 130 provides access to the service to the first terminal 101 at step 530, if the terms of the contract are compliant with the internal policy of the server 130.

The following steps correspond to a situation where the first user wants to revoke the digital contract. This may be allowed by the revocation policy, or may be not sufficient to revoke the contract according to the revocation policy (for example because the revocation policy specifies that all the signatories must revoke the digital contract so that the revocation is valid). It is to be noted that the steps 540 to 543 may also apply to a revocation intended by the second user.

At step 540, the first user indicates an intention to revoke the digital contract. To this end, a user input may be received by the first terminal 101 at step 540, the user input may for example consist in clicking on a revocation button on a user interface of the first terminal 101.

At step 541, the first terminal 101 generates a revocation signature based on the secret key of the first user.

At step 542, the first terminal 101 sends the revocation signature and the transaction identifier, to the registry 110, so that the registry 110 stores the revocation signature is association with the transaction identifier at step 5.43.

Therefore, the registry 110 stores N digital signatures in association with the transaction identifier, including:
- K or less digital signatures of the signatories to sign (accept) the digital contract;
- N-K revocation digital signatures of signatories to revoke the digital contract.

Both the first and second embodiments allow each signatory to have control over their consent and to archive the digital contract in their digital wallet for example. In addition, the embodiments of the invention are more secure than the solutions of the prior art are the validity of the digital contract can be checked by a verifier at any moment.

The second embodiment is decentralized and does involve the trusted party 120. The registry 110 may also be decentralized, such as a blockchain for example. This allows more resilience for the storage and further use of the digital contract.

In addition, the second embodiment allows more privacy as the digital contract is shared between the signatories only, unless one of the signatory decides to share it to a third party.

The invention therefore allows a smart use of VC and VP mechanism to achieve digital contract consent.

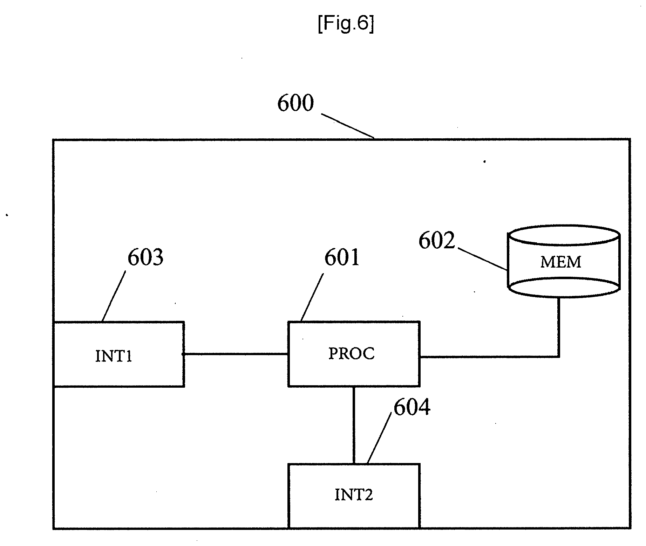

Figure 6 shows a structure of a device 600, being a digital contract issuer according to some embodiments of the invention.

Depending on the embodiment, and as explained above, the digital contract issuer 600 may be the trusted party 120 or a terminal of one of the signatories of the digital contract.

The issuer 600 comprises a processor 601 and a memory 602.

The processor 601 may comprise one or multiple microprocessors, a Central Processing Unit (CPU), on a single Integrated Circuit (IC) or several IC chips.

No restriction is attached to the memory 602, which may be any non-transient, tangible form of memory. For example, it can comprise ROM, EEPROM and/or flash memory. The processor 601 may be programmable and may be configured to execute instructions that are stored in its internal memory or to execute instructions that are stored in the memory 602.

The memory 602 can indeed store instructions for implementing the steps 300 to 302 of the method according to the invention described on figure 3.

In the first embodiment, the memory can store instructions for performing steps 401, 402, 403, 412, 413 and 414. In the second embodiment, the memory can store instructions for performing steps 501 to 505, 513, 515, 520, 523, 524, 541 and 542.

The issuer 600 further comprises a first interface 603 configured to obtain the contract information at step 300. In the first embodiment, the first interface 603 may be a network interface for receiving the contract information from a terminal of one of the signatories. In the second embodiment, the first interface 603 may be a user interface to allow the user, for example the first user, to input the contract information.

The issuer 600 further comprises a second interface 604 that is configured to allow access to the digital contract (proposal or final in the first embodiment) to the terminals of the signatories. In the first embodiment, the second interface 604 is configured to transmit the digital contract proposal and the final contract to all the signatories. In the second embodiment, the second interface 604 is configured to transmit the digital contract to the other signatories, for example to the second terminal 102.

The example embodiments are described in sufficient detail to enable those of ordinary skill in the art to embody and implement the systems and processes herein described. It is important to understand that embodiments can be provided in many alternate forms and should not be construed as limited to the examples set forth herein.

## Claims

1. A method of generating a digital contract between at least a first user of a first terminal (101) and a second user of a second terminal (102), wherein the method comprises:
- obtaining (300; 400; 500) contract information, the contract information comprising a first identifier associated with the first user and a second identifier associated with the second user;
- generating (301; 401; 501), based on the obtained contract information, a digital contract having a data structure with at least a first section (201) including terms of the digital contract and a second section (202) comprising the first identifier and the second identifier;
- giving access (302; 402; 403; 502) to the generated digital contract to the first terminal and to the second terminal, in order to obtain a first digital signature from the first user and a second digital signature from the second user.

2. - The method according to claim 1, wherein the first identifier is a first Decentralized Identifier, DID, and the second identifier is a second DID, wherein each of the first and second DIDs is a Uniform Resource Identifier, URI, and comprises a DID URI scheme identifier, an identifier of a DID method and a DID method-specific identifier.

3. - The method according to claim 1 or 2, wherein the contract information is obtained by a trusted party entity (120), different from the first and second terminals (101; 102), wherein the trusted party entity generates (401) the digital contract as a digital contract proposal, and wherein giving access to the generated digital contract comprises transmitting the digital contract proposal to the first terminal and to the second terminal;
wherein the method further comprises receiving (407), by the trusted party entity, a first digital signature of the digital contract proposal from the first terminal and receiving (411), by the trusted party entity, a second digital signature of the digital contract proposal from the second terminal;
wherein the method further comprises, generating (412), by the trusted party entity, a final digital contract based on the digital contract proposal, the first digital signature and the second digital signature.

4. - The method according to claim 3, wherein the final digital contract has a data structure of a Verifiable Credential (200), including:
- a first VC section (201) comprising the terms included in the first section of the digital contract proposal;
- a second VC section (202) comprising the first identifier of the first user, the second identifier of the second user, the first digital signature of the first user and the second digital signature of the second user;
- a third VC section (203) including a third digital signature of the trusted party entity, the third digital signature based on a secret key of the trusted party 120 and based on the first VC section and the second VC section of the final digital contract.

5. - The method according to claim 1 or 2, wherein the contract information is obtained by the first terminal (101), wherein the first terminal generates (501) the digital contract, and wherein giving access to the generated digital contract comprises transmitting (502) the digital contract to the second terminal (102).

6. - The method according to claim 5, wherein the method further comprises generating (503) a first digital signature of the digital contract by the first terminal (101), based on a secret key of the first terminal and on the digital contract;
determining a transaction identifier based on the digital contract;
transmitting (505) to a registry (110), via a communication network (100), the first digital signature and the transaction identifier, so that the registry stores the first digital signature in association with the transaction identifier.

7. - The method according to claim 6, further comprising:
- transmitting (513), by the first terminal (101), a request to obtain digital signatures associated with the transaction identifier to the registry (110);
- receiving (514), by the first terminal, a response from the registry comprising at least one digital signature associated with the transaction identifier; and
- determining (515), by the first terminal, a validity of the digital contract based on whether the second user of the second terminal (102) has transmitted a second digital signature associated with the transaction identifier to the registry.

8. - The method according to claim 6 or 7, further comprising:
- receiving (522), by the first terminal (101), a request to present the digital contract from a server (130);
- generating (523), by the first terminal, a Verifiable Presentation (210), VP, of the digital contract, wherein the VP comprises a first VP section (211) including at least the first identifier of the first terminal, a second VP section (212) including the digital contract and a third VP section (213) comprising a presentation digital signature determined based on the secret key of the first terminal, on the first VP section and on the second VP section;
- transmitting (524) the VP to the server.

9. - The method according to claim 8, wherein the server (130) provides access to a service, wherein the first terminal (101) transmits (520) a request of service to the server, and wherein the request to present the digital contract is received from the server in response to the request of service.

10. - The method according to one of claims 6 to 9, wherein the terms of digital contract comprise a revocation policy of the digital contract and wherein the method further comprises generating (541), by the first terminal (101), a revocation digital signature based on the secret key of the first terminal, and transmitting (542), by the first terminal, a request for revocation of the digital contract to the registry, the request for revocation comprising the revocation digital signature and the transaction identifier.

11. - The method according to one of the preceding claims, wherein the first identifier of the first user is associated with a public key of the first terminal (101) in an identity registry (140) and wherein the second identifier of the first user is associated with a second public key of the second terminal (102) in the identity registry.

12. - A computer program comprising instructions arranged for implementing the method according to one of the preceding claims, when said instructions are executed by a processor (601).

13. - A device (600) for generating a digital contract between at least a first user of a first terminal (101) and a second user of a second terminal (102), comprising:
- a first interface (603) configured to obtain contract information, the contract information comprising a first identifier associated with the first user and a second identifier associated with the second user;
- a processor (601) configured to generate, based on the obtained contract information, a digital contract having a data structure with at least a first section (201) including terms of the digital contract and a second section (202) comprising the first identifier and the second identifier;
- a second interface (604) configured to give access to the generated digital contract to the first terminal and to the second terminal, in order to obtain a first digital signature from the first user and a second digital signature from the second user.

14. - A system comprising the device (600) according to claim 13, a first terminal (101) of a first user and a second terminal (102) of a second user, wherein the device is different from the first terminal and from the second terminal.

15. - A system comprising the device according to claim 13, wherein the device (600) is a first terminal (101) of a first user, and further comprising a second terminal (102) and a registry (110) configured to store digital signatures in association with a transaction identifier determined based on the digital contract.
